# EUROPÄISCHE PATENTSCHRIFT

(11) **EP 3 140 175 B1**
(45) Veröffentlichungstag und Bekanntmachung des Hinweises auf die Patenterteilung: **15.11.2017**
(21) Anmeldenummer: 15718958.0
(22) Anmeldetag: 04.05.2015
(51) Int. Cl.: B62D 5/04, F16H 25/24, F16H 25/20, F16H 25/22, F16C 23/08

(54) **LAGER FÜR EINEN KUGELGEWINDETRIEB**
BEARING FOR A BALL SCREW DRIVE
PALIER POUR VIS À BILLES

(30) Priorität: 06.05.2014 DE 102014006469
(43) Veröffentlichungstag der Anmeldung: 15.03.2017
(73) Patentinhaber: ThyssenKrupp Presta AG, 9492 Eschen (LI); thyssenkrupp AG, 45143 Essen (DE)
(72) Erfinder: LÁSZLÓ, Gergely, 73734 Esslingen-Berkheim (DE)
(74) Vertreter: thyssenkrupp Intellectual Property GmbH
(86) Internationale Anmeldenummer: PCT/EP2015/059696
(87) Internationale Veröffentlichungsnummer: WO 2015/169735

(56) Entgegenhaltungen:
- DE-A1-102009 018 674
- DE-A1-102009 020 554
- DE-A1-102011 117 723

## Beschreibung

Die vorliegende Erfindung betrifft ein Lager eines Kugelgewindetriebs mit den Merkmalen des Oberbegriffs des Anspruchs 1.

Kugelgewindetriebe werden in elektromechanischen Hilfskraftlenkungen von Kraftfahrzeugen eingesetzt. Solche Hilfskraftlenkungen weisen einerseits Zahnstangen bzw. Ritzel oder andererseits Riemenantriebe zur Kraftübertragung auf. Bei Riemensystemen ist der unterstützende Motor mittels eines Riemens mit dem Kugelgewindetrieb verbunden. Der Kugelgewindetrieb, bestehend aus Kugelmutter und Gewindespindel, setzt die Drehbewegung der Kugelmutter in eine Linearbewegung der Spindel um, wodurch die Zahnstange zur Lenkung der Räder in Axialrichtung verschoben wird. Der Riemen wirkt auf die Kugelmutter über eine mit der Kugelmutter drehfest verbundene Riemenscheibe. Hierbei besteht die Gefahr eines Spannungsabfalls des Riemens, wenn sich die Kugelmutter bei elastisch abgestützten Kugelgewindetrieben um ihre axiale Achse verkippt. Der Riemen wird dabei zumindest teilweise von der Riemenscheibe bzw. dem Motor entkoppelt, wodurch die durch den Motor zur Lenkung aufgebrachte Unterstützungskraft vermindert wird. Zudem führt die ungleichmäßige Beanspruchung des Riemens zu einer unerwünschten Reduktion seiner Lebensdauer.

Besonders beim sogenannten Bordsteinabdrücktest ist der Kugelgewindetrieb hohen Belastungen ausgesetzt. Der Bordsteinabdrücktest wird bei Serienfahrzeugen durchgeführt um den Zahnstangendurchmesser der Lenkung zu bestimmen.

Die DE 10 2010 003 233 A1 offenbart einen Kugelgewindetrieb einer Kraftfahrzeuglenkung mit einer Kugelmutter, die in einem Gestell mittels eines Wälzlagers gelagert ist, wobei zwischen dem Wälzlager und dem Gestell ein Elastomer vorgesehen ist, welches das Wälzlager vorgespannt gegenüber dem Gestell abstützt und eine Schalleitung aus dem Inneren des Lenkgetriebes über das Wälzlager nach außen verhindert.

Aus der DE 10 2010 029 767 A1 ist ein Kugelgewindetrieb für Kraftfahrzeuglenkungen bekannt, bei dem die Luftschallabstrahlung auf ein Mindestmaß reduziert ist. Dazu ist die Kugelmutter über ein Lager in einem Gehäuse gelagert, wobei das Lager axiale und radiale Dämpfungseinrichtungen, die zwischen Lager und Lagersitz angeordnet sind, aufweist.
Die zuvor genannten Kugelgewindetrieblagerungen können teilweise lagerseitige Biegemomente und auf die Mutter einwirkende Axialkräfte kompensieren. Eine gleichbleibende Riemenspannung kann mit diesen Ausführungen aber nicht realisiert werden.
Aus der DE 10 2011 117 723 A1 ist ein Kugelgewindetrieb einer Kraftfahrzeuglenkung bekannt, bei dem die Kugelmutter relativ zur Riemenscheibe in axialer und/oder radialer Richtung beweglich ist. Die DE 10 2011 117 723 A1 offenbart somit ein Lager gemäß dem Oberbegriff des Anspruchs 1. Zwar ist die Riemenscheibe radial und/oder axial bis zu einem gewissen Grad von der Kugelmutter entkoppelt, diese Entkopplung reicht jedoch nicht aus, die durch Sonderereignisse, wie dem Bordsteinabdrücktest, entstehenden axialen Kräfte zu kompensieren.
Es ist deshalb eine Aufgabe der Erfindung, ein Lager für einen Kugelgewindetrieb einer Kraftfahrzeuglenkung aufzuzeigen, das genügend Bewegungsfreiheit für die Kugelmutter bereitstellt um auch Sonderereignisse, wie den Bordsteinabdrücktest, ohne Schaden des Kugelgewindetriebs zu überstehen. Gleichzeitig muss eine Entkopplung der Bewegung der Kugelmutter zur Riemenscheibe eine gleichbleibende Riemenspannung gewährleisten.
Diese Aufgabe wird von einem Lager mit den Merkmalen des Anspruchs 1 gelöst. Danach ist ein Lager für einen Kugelgewindetrieb vorgesehen mit einer um eine Längsachse drehbaren Kugelmutter zur Aufnahme einer darin konzentrisch angeordneten Gewindespindel, wobei die Kugelmutter in einem Innenring und zumindest teilweise in einem Zwischenring und einem Außenring des Lagers angeordnet ist, und mit einer Riemenscheibe, die mit dem Zwischenring drehfest verbunden ist, wobei eine Außenumfangsfläche des Innenrings zumindest abschnittsweise konvex und eine Innenumfangsfläche des Zwischenrings zumindest abschnittsweise konkav ausgebildet ist, und wobei die Kugelmutter kippbar gegenüber der Riemenscheibe in dem Lager angeordnet ist, und wobei der Innenring drehfest und in axialer Richtung unbeweglich mit der Kugelmutter verbunden ist und der Zwischenring mit dem Innenring über Federelemente drehfest verbunden ist. Dieses Lager erlaubt es das Antriebsmoment von der Riemenscheibe auf die Kugelmutter über Federelemente zu übertragen. Dabei kann die Kugelmutter in dem Lager verkippt werden, ohne dass die Riemenscheibe mitkippt.

Der eingangs erwähnte Spannungsabfall des Riemens wird dadurch wirksam vermieden.

Dabei sind die Federelemente bevorzugt zwei Federringe, die jeweils in einem Hohlraum im unbelasteten Zustand um die Längsachse radialsymmetrisch angeordnet sind.

Weiterhin ist es vorteilhaft, wenn die Form der Federelemente so ausgelegt ist, dass bei einer Verkippung der Kugelmutter die Änderung der Form des Hohlraums kompensiert ist. Dadurch wird das Axialspiel des Lagers ausgeglichen.

Bevorzugt weist der Innenring auf einer Außenumfangsseite und der Zwischenring auf einer Innenumfangsseite von ihren Stirnseiten her Ausnehmungen zur Aufnahme der Federelemente auf.

In einer vorteilhaften Ausführungsform weisen die Federringe ein m-förmiges Profil auf, welches durch zwei horizontale Bereiche und einem vertikalen Bereich mit einer mittig angeordneten Sicke gebildet ist.

Die Sicke kann als Sitz für einen Dämpfungskörper dienen. Durch diese axiale Dämpfung des Lagers wird eine Geräuschentwicklung weitgehend reduziert.

Vorzugsweise ist der Dämpfungskörper ein elastomerer Ring.

In einer vorteilhaften Ausführungsform ist der Innenring auf der Kugelmutter mittels einer Überwurfmutter drehfest angeordnet und axial gesichert.

Weiterhin ist es bevorzugt, dass die Riemenscheibe mit dem Zwischenring formschlüssig verbunden ist. So können auch hohe Drehmomente von der Riemenscheibe auf den Zwischenring übertragen werden.

Eine bevorzugte Ausführungsform der Erfindung wird nachfolgend anhand der Zeichnung näher erläutert. Es zeigt:

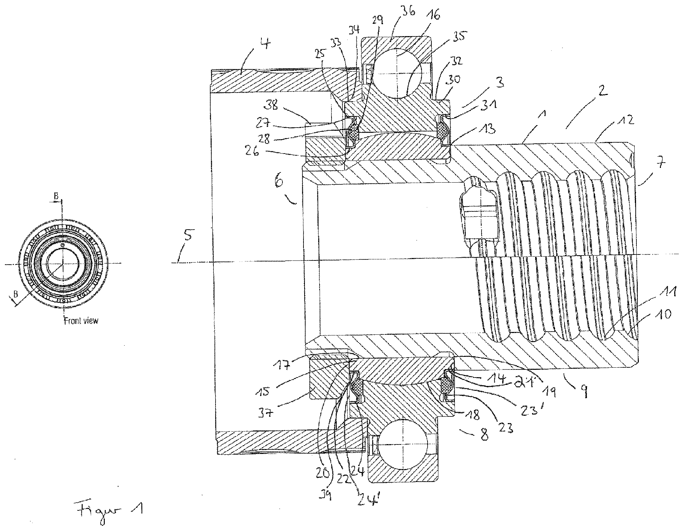

- Fig. 1:: einen Längsschnitt eines erfindungsgemäßen Lagers eines Kugelgewindetriebs.
Figur 1 zeigt eine Kugelmutter 1 eines Kugelgewindetriebs 2, ein Wälzlager 3 und eine Riemenscheibe 4. Die Kugelmutter 1 ist entlang einer Längsachse 5 hohl ausgestaltet zur Aufnahme einer nicht dargestellten Gewindespindel. Die Kugelmutter 1 weist zwei offene Enden 6, 7 auf. An das erste offene Ende 6 schließt sich ein erster Bereich 8 an, dem das Wälzlager 3 zugeordnet ist und an das zweite Ende 7 schließt sich ein zweiter Bereich 9 an, in dem die Kugelmutter 1 auf der Innenseite 10 eine schraubenförmige Kugellaufbahn 11 aufweist. Der erste Bereich 8 weist einen kleineren Außendurchmesser auf als der zweite Bereich 9 der Kugelmutter 1. Der dadurch auf der Außenseite 12 der Kugelmutter 1 entstehende umlaufende Absatz 13 bildet einen Sitz 14 für einen Innenring 15 des Wälzlagers 3. Das Wälzlager 3 ist im unbelasteten Zustand rotationssymmetrisch um die Längsachse 5 des Kugelgewindetriebs 2 angeordnet. Weiterhin weist das Wälzlager 3 eine Querachse 16 auf, bezüglicher welcher das Wälzlager 3 im unbelasteten Zustand spiegelsymmetrisch angeordnet ist. Der Innenring 15 ist auf der Innenseite 17 zylindrisch und auf der Außenseite 18 konvex ausgeformt. Auf der Außenseite 18 des Innenrings 15 sind von den Stirnflächen 19, 20 ausgehend Ausschnitte 21, 22 zur Anlage eines jeweiligen Federrings 23, 24 vorgesehen. Die Federringe 22, 23 weisen im Längsschnitt ein abgerundetes m-förmiges Profil auf, das zur Querachse 16 des Lagers 3 zeigend ausgerichtet ist. Das m-förmige Profil setzt sich zusammen aus jeweils zwei horizontalen Bereichen 25, 26 und einem vertikalen Bereich 27. Der vertikale Bereich 27 weist mittig, zur Querachse 16 des Lagers 3 zeigend eine Sicke 28 auf, die zur Aufnahme eines Gummirings 29 dient. Zwischen den Gummiringen 29 ist ein Zwischenring 30 angeordnet.

Der Zwischenring 30 ist auf der Innenseite bis auf zwei kleine Winkelbereiche im Wesentlichen konkav ausgeformt. In den genannten Winkelbereichen ist der Zwischenring 30 zylindrisch, zur Aufnahme des Innenrings bei der Montage, ausgeformt. Die Winkelbereiche sind dabei vorzugsweise in Umfangsrichtung um 180° versetzt angeordnet.

Die konkave Innenseite des Zwischenrings 30 und die konvexe Außenseite des Innenrings 15 sind so ausgeformt, dass ihre Symmetrieachsen mit der Querachse 16 des Wälzlagers übereinstimmen.

Zur Aufnahme der Federringe 23, 24 weist der Zwischenring 30 auf der Innenseite von den Stirnseiten ausgehend Ausschnitte 31 auf. Der Innenring 15 und der Zwischenring 30 schließen mit den Stirnseiten der Federringe 23, 24 ab. Die Federringe 23, 24 werden zum größten Teil vom Zwischenring 30 umgeben.

Die Außenseite des Zwischenrings 30 weist ebenfalls von den Stirnseiten ausgehend jeweils einen Ausschnitt 32, 33 auf. Der gewindeferne Ausschnitt 33 dient dabei als Sitz für die Riemenscheibe 4. Die Riemenscheibe 4 weist dazu auf der Innenseite zur zum Wälzlager zeigenden Stirnseite einen Vorsprung 34 auf. Mittels dieses Vorsprungs 34 wird die Riemenscheibe 4 in den gewindefernen Ausschnitt 33 des Zwischenrings 30 bzw. auf den Zwischenring 30 gepresst. Weiterhin weist der Innenring 15 auf der Außenseite mittig angeordnet eine Laufbahn 35 zur Aufnahme eines Wälzkörpers auf. Der Wälzkörper wird weiterhin von einem Außenring 36 in der Laufbahn 35 gehalten.

Die Riemenscheibe 4 ist so konstruiert, dass ihre Außenseite in etwa auf Höhe der Mitte des Wälzkörpers angeordnet ist. Auf der Außenseite weist die Riemenscheibe 4 eine Struktur auf, die einen Reibschluss mit einem nicht dargestellten Riemen erhöht.

Das Wälzlager 3 wir an der gewindefernen Seite durch eine Überwurfmutter 37 auf der Kugelmutter 1 drehfest gehalten. Dazu weisen die Überwurfmutter 37 und die Kugelmutter 1 ineinander greifende Gewinde auf. Um die Überwurfmutter 37 mit Werkzeug zu montieren oder demontieren sind Ausnehmungen 38 vorgesehen. Auf der einen Stirnseite schließt die Überwurfmutter 37 im montierten Zustand mit dem ersten Ende der Kugelmutter 1 ab und auf der anderen Stirnseite steht die Überwurfmutter 37 mit dem Innenring 15 und teilweise mit dem Federring 24 in Anlage. Die Überwurfmutter 37 weist auf der Außenseite einen zur gewindenahen Stirnseite zeigenden umlaufenden Ausschnitt 39 auf, der einen Teil des Federrings 24 freilegt.

Das Verkippen des Kugelmutterkörpers wird durch die sphärischen Flächen sichergestellt. Die sphärischen Flächen sind mit axialem Spiel vorgesehen. Durch die Federringe und die Gummiringe wird das Axialspiel ausgeglichen.

Um die Antriebsmomentübertragung von der Riemenscheibe auf die Kugelmutter zu gewährleisten wird die Riemenscheibe auf den Zwischenring aufgepresst. Zur Erhöhung des möglichen übertragbaren Momentes können auf den Kontaktflächen geeignete Konturen zum Beispiel Noppen vorgesehen sein um einen Formschluss zu bewirken. Vom Zwischenring auf den Innenring wird die Antriebsmomentübertragung durch die eingepressten Federringe ermöglicht. Diese sind durch ihre Form so ausgelegt, dass bei einer Verkippung der Kugelmutter die Hohlraumänderungen kompensiert werden.

Das erfindungsgemäße Lager erlaubt der Kugelmutter das Mitkippen mit der Gewindespindel während einer starken Kippbelastung des Kugelgewindetriebs, zum Beispiel während des Bordsteinabdrücktests. Dabei wird garantiert, dass während des Verkippens der Kugelmutter die Riemenscheibe nicht mitkippt. Dadurch kann der eingangs erwähnte Spannungsabfall wirksam vermeiden werden, indem nämlich der Riemen während des Betriebs ständig vollflächig auf der Riemenschiebe aufliegt. Durch die Entkopplung der Riemenscheibe von der Kugelmutter kann die von einem Unterstützungsmotor auf die Kugelmutter ausgeübte Drehkraft permanent aufrecht erhalten werden. Weiterhin weist das Lager eine axiale Dämpfung auf, die eine Geräuschentwicklung im Lager (Klappern) verhindert.

## Patentansprüche

1. Lager (3) für einen Kugelgewindetrieb (2) mit einer um eine Längsachse (5) drehbaren Kugelmutter (1) zur Aufnahme einer darin konzentrisch angeordneten Gewindespindel, wobei
die Kugelmutter (1) in einem Innenring (15) und zumindest teilweise in einem Zwischenring (30) und einem Außenring (36) des Lagers (3) angeordnet ist, und mit einer Riemenscheibe (4), die mit dem Zwischenring (30) drehfest verbunden ist, wobei
eine Außenumfangsfläche des Innenrings (15) zumindest bereichsweise konvex und eine Innenumfangsfläche des Zwischenrings (30) zumindest abschnittsweise konkav ausgebildet ist, und wobei
die Kugelmutter (1) kippbar gegenüber der Riemenscheibe (4) in dem Lager (3) angeordnet ist, **dadurch gekennzeichnet, dass**
der Innenring (15) drehfest und in axialer Richtung unbeweglich mit der Kugelmutter (1) verbunden ist und der Zwischenring (30) mit dem Innenring (15) über Federelemente (23, 24) drehfest verbunden ist.

2. Lager nach Anspruch 1, **dadurch gekennzeichnet, dass** die Federelemente (23, 24) zwei Federringe sind, die jeweils in einem Hohlraum (23', 24') in einem unbelasteten Zustand um die Längsachse (5) radialsymmetrisch angeordnet sind.

3. Lager nach Anspruch 1 oder 2, **dadurch gekennzeichnet, dass** die Form der Federelemente (23, 24) so ausgelegt ist, dass bei einer Verkippung der Kugelmutter (1) die Änderung der Form des Hohlraums (23', 24') kompensiert ist.

4. Lager nach einem der vorhergehenden Ansprüche, **dadurch gekennzeichnet, dass** der Innenring (15) auf einer Außenumfangsseite und der Zwischenring (30) auf einer Innenumfangsseite von ihren Stirnseiten her Ausnehmungen (21, 22, 31) zur Aufnahme der Federelemente (23, 24) aufweisen.

5. Lager nach einem der Ansprüche 2 bis 4, **dadurch gekennzeichnet, dass** die Federringe (23, 24) ein m-förmiges Profil aufweisen, welches durch zwei horizontale Bereiche (25, 26) und einem vertikalen Bereich (27) mit einer mittig angeordneten Sicke (28) gebildet ist.

6. Lager nach Anspruch 5, **dadurch gekennzeichnet, dass** die Sicke (28) der Federringe (23, 24) einen Sitz für einen Dämpfungskörper (29) bildet.

7. Lager nach Anspruch 6, **dadurch gekennzeichnet, dass** der Dämpfungskörper (29) ein elastomerer Ring ist.

8. Lager nach einem der vorhergehenden Ansprüche, **dadurch gekennzeichnet, dass** der Innenring (15) auf der Kugelmutter (1) mittels einer Überwurfmutter (37) drehfest angeordnet und axial gesichert ist.

9. Lager nach einem der vorhergehenden Ansprüche, **dadurch gekennzeichnet, dass** die Riemenscheibe (4) mit dem Zwischenring (30) formschlüssig verbunden ist.

10. Lager nach einem der vorhergehenden Ansprüche, **dadurch gekennzeichnet, dass** der Kugelgewindetrieb (2) Teil einer elektromechanischen Hilfskraftlenkung eines Kraftfahrzeuges ist.

## Claims

1. Bearing (3) for a ball screw drive (2) with a ball nut (1) which is rotatable about a longitudinal axis (5) and intended for receiving a threaded spindle arranged concentrically therein, wherein the ball nut (1) is arranged in an inner ring (15) and at least partially in an intermediate ring (30) and an outer ring (36) of the bearing (3), and
with a belt pulley (4) which is connected to the intermediate ring (30) for rotation therewith, wherein
an outer circumferential surface of the inner ring (15) is designed to be convex at least in certain regions and an inner circumferential surface of the intermediate ring (30) is designed to be concave at least in certain sections, and wherein
the ball nut (1) is arranged in the bearing (3) so as to be tiltable with respect to the belt pulley (4), **characterized in that**
the inner ring (15) is connected to the ball nut (1) for rotation therewith and so as to be immovable in the axial direction and the intermediate ring (30) is connected via spring elements (23, 24) to the inner ring (15) for rotation therewith.

2. Bearing according to Claim 1, **characterized in that** the spring elements (23, 24) are two spring rings which are each arranged in a cavity (23', 24') so as to be radially symmetrical about the longitudinal axis (5) in an unloaded state.

3. Bearing according to Claim 1 or 2, **characterized in that** the shape of the spring elements (23, 24) is designed such that, during tilting of the ball nut (1), the change in the shape of the cavity (23', 24') is compensated.

4. Bearing according to one of the preceding claims, **characterized in that** the inner ring (15), on an outer circumferential side, and the intermediate ring (30), on an inner circumferential side, have, starting from their end sides, recesses (21, 22, 31) for receiving the spring elements (23, 24).

5. Bearing according to one of Claims 2 to 4, **characterized in that** the spring rings (23, 24) have an m-shaped profile which is formed by two horizontal regions (25, 26) and a vertical region (27) with a centrally arranged bead (28).

6. Bearing according to Claim 5, **characterized in that** the bead (28) of the spring rings (23, 24) forms a seat for a damping body (29).

7. Bearing according to Claim 6, **characterized in that** the damping body (29) is an elastomer ring.

8. Bearing according to one of the preceding claims, **characterized in that** the inner ring (15) is arranged in a rotationally fixed manner and axially secured on the ball nut (1) by means of a union nut (37) .

9. Bearing according to one of the preceding claims, **characterized in that** the belt pulley (4) is positively connected to the intermediate ring (30).

10. Bearing according to one of the preceding claims, **characterized in that** the ball screw drive (2) is part of an electromechanical power steering system of a motor vehicle.

## Revendications

1. Palier (3) pour une vis à billes (2) avec un écrou à bille (1) pouvant tourner autour d'un axe longitudinal (5) destiné à recevoir une broche filetée disposée de façon concentrique dans celui-ci,
dans lequel l'écrou à bille (1) est disposé dans une bague intérieure (15) et au moins en partie dans une bague intermédiaire (30) et une bague extérieure (36) du palier (3), et
avec une poulie à courroie (4), qui est solidaire en rotation de la bague intermédiaire (30),
dans lequel une surface périphérique extérieure de la bague intérieure (15) est au moins localement convexe et une surface périphérique intérieure de la bague intermédiaire (30) est au moins localement concave, et dans lequel l'écrou à bille (1) est disposé dans le palier (3) de façon inclinable par rapport à la poulie à courroie (4),
**caractérisé en ce que** la bague intérieure (15) est assemblée de façon solidaire en rotation et immobile en direction axiale avec l'écrou à bille (1) et la bague intermédiaire (30) est assemblée à la bague intérieure (15) de façon solidaire en rotation au moyen d'éléments de ressort (23, 24).

2. Palier selon la revendication 1, **caractérisé en ce que** les éléments de ressort (23, 24) sont deux rondelles élastiques, qui sont disposées dans un espace creux (23', 24') de façon radialement symétrique autour de l'axe longitudinal (5) dans un état non chargé.

3. Palier selon la revendication 1 ou 2, **caractérisé en ce que** la forme des éléments de ressort (23, 24) est conçue de telle manière que, lors d'une inclinaison de l'écrou à bille (1), la variation de la forme de l'espace creux (23', 24') soit compensée.

4. Palier selon l'une quelconque des revendications précédentes, **caractérisé en ce que** la bague intérieure (15) présente sur un côté périphérique extérieur et la bague intermédiaire (30) présente sur un côté périphérique intérieur à partir de leurs côtés frontaux des évidements (21, 22, 31) destinés à recevoir les éléments de ressort (23, 24).

5. Palier selon l'une quelconque des revendications 2 à 4, **caractérisé en ce que** les rondelles élastiques (23, 24) présentent un profil en m, qui est formé par deux régions horizontales (25, 26) et une région verticale (27) avec une moulure (28) disposée au milieu.

6. Palier selon la revendication 5, **caractérisé en ce que** la moulure (28) des rondelles élastiques (23, 24) forme un siège pour un corps d'amortissement (29).

7. Palier selon la revendication 6, **caractérisé en ce que** le corps d'amortissement (29) est un anneau élastomère.

8. Palier selon l'une quelconque des revendications précédentes, **caractérisé en ce que** la bague intérieure (15) est disposée sans rotation sur l'écrou à bille (1) et est calée axialement au moyen d'un écrou-raccord (37).

9. Palier selon l'une quelconque des revendications précédentes, **caractérisé en ce que** la poulie à courroie (4) est assemblée par emboîtement avec la bague intermédiaire (30).

10. Palier selon l'une quelconque des revendications précédentes, **caractérisé en ce que** la vis à billes (2) fait partie d'une direction assistée électromécanique d'un véhicule automobile.
